# EUROPEAN PATENT SPECIFICATION

(11) **EP 2 584 256 B1**
(45) Date of publication and mention of the grant of the patent: **28.01.2015**
(21) Application number: 11185409.7
(22) Date of filing: 17.10.2011
(51) Int. Cl.: F23C 9/00, F23L 7/00, F23L 15/02

(54) **Oxygen preheating in oxyfuel combustion system**
Sauerstoffvorwärmung in einem Oxyfuel-Verbrennungssystem
Préchauffage de l'oxygène dans un système de combustion à oxy-gaz

(43) Date of publication of application: 24.04.2013
(73) Proprietor: ALSTOM Technology Ltd, 5400 Baden (CH)
(72) Inventor: Stallmann, Olaf, 55270 Essenheim (DE)

(56) References cited:
- DE-A1- 10 356 701
- DE-A1- 10 356 703
- DE-A1-102008 009 129
- US-B1- 6 202 574

## Description

### Field of the invention

The proposed invention relates to an oxyfuel combustion system and a method of operating an oxyfuel combustion system.

### Background

In the combustion of a fuel, such as coal, oil, peat, waste, etc., in a combustion plant, such as a power plant, a hot process gas is generated, such process gas containing, among other components, carbon dioxide CO₂. With increasing environmental demands various processes for removing carbon dioxide from the process gas have been developed. One such process is the so called oxyfuel process. In an oxyfuel process a fuel, such as one of the fuels mentioned above, is combusted in the presence of a nitrogen-lean gas. Oxygen gas, which is provided by an oxygen source, is supplied to a boiler in which the oxygen gas oxidizes the fuel. In the oxyfuel combustion process a carbon dioxide rich flue gas is produced, which can be sequestered in order to reduce the emission of carbon dioxide into the atmosphere. A portion of the produced carbon dioxide rich flue gas is often recirculated to the combustion process in order to control the temperature in the boiler. The recirculated flue gas can also be used to carry fuel into the boiler and ensure adequate convective heat transfer to all boiler areas.

In conventional power plants regenerative heat exchangers are well established to transfer heat between the hot flue gas out of the boiler with cold air used for combustion. In oxyfuel installations the air stream is replaced by the recirculated carbon dioxide rich flue gas stream, which is mixed with oxygen gas from the oxygen source. To increase the efficiency of the plant oxygen gas provided by the oxygen source is preferably preheated before being introduced into the boiler. Currently the oxygen gas is mixed with the recirculation gas before the regenerative heat exchanger in order to minimize the cost of heating the oxygen. Due to leakage from the cold side to the hot side in the regenerative heat exchanger, for example due to pressure differences, the carbon dioxide rich flue gas from the boiler is diluted by the oxygen enriched recirculation gas. This leads to higher efforts for purification of the carbon dioxide prior to sequestration, and also to a loss of oxygen gas for the combustion. Currently there are leakage rates of up to 2% technically accepted. These leakages increase the oxygen content in the flue gas relatively by up to 10%. An alternative solution is to mix the gas streams after the regenerative heat exchanger. Then there has to be a dedicated oxygen preheater installed. This preheater is normally steam driven which leads to a decrease in the overall efficiency of the power plant.

### Summary of the invention

It is an object of the present invention to provide an oxyfuel combustion system and a method of operating an oxyfuel combustion system which alleviate at least some of the above mentioned problems.

According to aspects illustrated herein, there is provided a method of operating an oxyfuel combustion system according to claim 1.

This solution reduces the need for preheating the oxygen gas with steam, which would lead to an efficiency decrease in the power plant. It may also provide reduced oxygen entrainment into the flue gas, thereby reducing the efforts needed for purification of the carbon dioxide prior to sequestration, and also the loss of oxygen gas for the combustion process. Furthermore, implementation of the present solution in existing oxyfuel combustion systems can be done easily and inexpensively, and results in a reduction of the overall operating costs of the system.

According to an embodiment, the oxygen gas is provided by an air separation unit.

According to an embodiment, the method further comprises separating carbon dioxide from the non-recirculated portion of the carbon dioxide rich flue gas stream depleted in dust particles and sulphur dioxide.

According to an embodiment, the first gas/gas heat exchanger is a regenerative heat exchanger. The regenerative heat exchanger may, for example, be of the rotating type, where a matrix of heat transfer elements are mounted on a wheel. The wheel is arranged between the hot and the cold stream such that during rotation the elements that are heated up in the hot stream are transferred to the cold side. The hot and the cold passes are separated via sealing strips mounted on the wheel. Leakage at the sealing strips, as well as remaining oxygen enriched recirculated gas in the heat transfer matrix when the wheel turns results in entrainment of oxygen into the hot flue gas coming from the boiler.

According to an embodiment, the second gas/gas heat exchanger is an indirect contact heat exchanger. The indirect contact heat exchanger may, for example, be a tube and shell type heat exchanger.

According to the invention, the portion of the reheated carbon dioxide rich flue gas stream used for preheating the oxygen gas is subsequently rejoined with the recirculated carbon dioxide rich flue gas stream depleted in dust particles and sulphur dioxide.

According to other aspects illustrated herein, there is provided an oxyfuel combustion system according to claim 5.

According to an embodiment, the oxygen gas source comprises an air separation unit.

According to an embodiment, the oxyfuel combustion system further comprises a gas compression and purification unit (GPU) operative for separating carbon dioxide from the non-recirculated portion of the carbon dioxide rich flue gas stream depleted in dust particles and sulphur dioxide.

According to an embodiment, the first gas/gas heat exchanger is a regenerative heat exchanger.

According to an embodiment, the second gas/gas heat exchanger is an indirect contact heat exchanger.

According to the invention, the flue gas recirculating conduit in fluid connection with the carbon dioxide rich flue gas stream downstream of the dust and sulphur dioxide removal units, is further operative for rejoining the portion of the reheated carbon dioxide rich flue gas stream used for preheating the oxygen gas with the recirculated carbon dioxide rich flue gas stream depleted in dust particles and sulphur dioxide.

The above described and other features are exemplified by the following figures and detailed description.

### Brief description of the Drawings

Referring now to the figures, which are exemplary embodiments, and wherein the like elements are numbered alike:
Fig. 1 (prior art) is a schematic side view of an oxyfuel combustion system.
Fig. 2 is a schematic side view of an oxyfuel combustion system according to the present invention.

### Detailed description of preferred embodiments

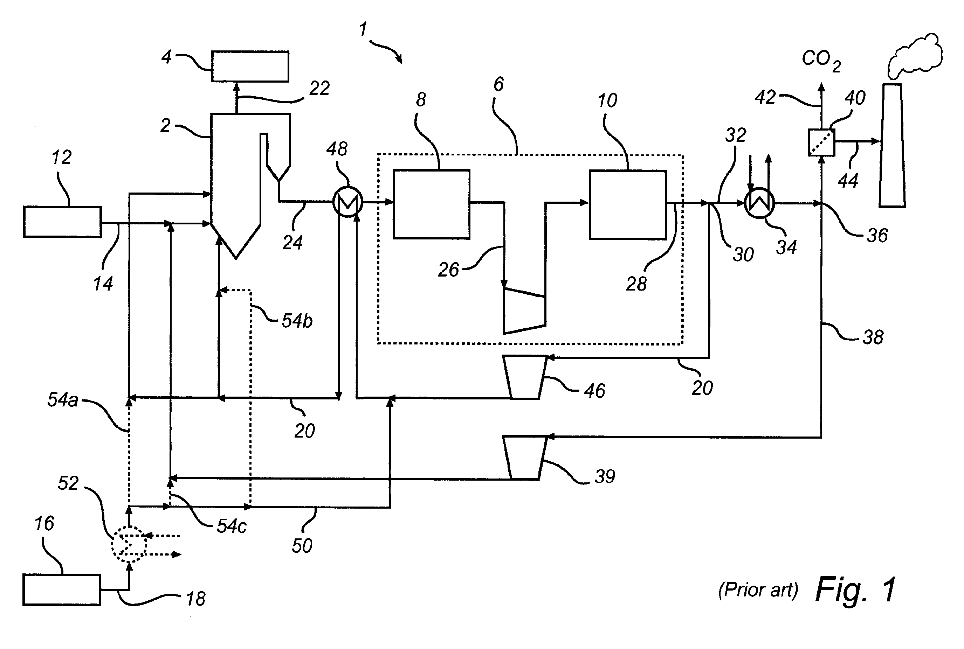

Fig. 1 (prior art) is a schematic representation of a boiler system 1, as seen from the side thereof. The boiler system 1 comprises, as main components, a boiler 2, being in this embodiment an oxyfuel boiler, a steam turbine electric power generation system, schematically indicated as 4, and a gas cleaning system 6. The gas cleaning system 6 comprises a particulate removal device, which may, for example, be a fabric filter or an electrostatic precipitator 8, and a sulphur dioxide removal system, which may be a wet scrubber 10.

A fuel, such as coal, oil, or peat, is contained in a fuel storage 12, and can be supplied to the boiler 2 via a supply pipe 14. An oxygen gas source 16 is operative for providing oxygen gas in a manner which is known per se. The oxygen gas source 16 may be an air separation plant operative for separating oxygen gas from air, an oxygen separating membrane, a storage tank, or any other source for providing oxygen gas to the boiler system 1. A supply duct 18 is operative for forwarding the produced oxygen gas, comprising typically 90-99.9 vol.% oxygen, O₂, to the boiler 2. A duct 20 is operative for forwarding recirculated flue gas, which contains carbon dioxide, to the boiler 2. As indicated in Fig. 1, the supply duct 18 joins the duct 20 upstream of the boiler 2, such that oxygen gas and recirculated flue gas, which contains carbon dioxide, may become mixed with each other to form a gas mixture containing typically about 20-50 % by volume of oxygen gas, the balance being mainly carbon dioxide and water vapour, upstream of the boiler 2. Since almost no air enters the boiler 2 there is almost no nitrogen gas supplied to the boiler 2. In practical operation, less than 3 % by volume of the gas volume supplied to the boiler 2 is air, which mainly enters the boiler system 1 as a leakage of air via, for example, the boiler 2 and the gas cleaning system 6. The boiler 2 is operative for combusting the fuel, that is to be supplied via the supply pipe 14, in the presence of the oxygen gas, mixed with the recirculated flue gas, which contains carbon dioxide, that is to be supplied via the duct 20. A steam pipe 22 is operative for forwarding steam, that will be produced in the boiler 2 as a result of the combustion, to the steam turbine electric power generation system 4, which is operative for generating power in the form of electric power.

A duct 24 is operative for forwarding carbon dioxide rich flue gas generated in the boiler 2 to the dust removal device 8. By "carbon dioxide rich flue gas" is meant that the flue gas leaving the boiler 2 via the duct 24 will contain at least 40 % by volume of carbon dioxide. Often more than 50% by volume of the flue gas leaving the boiler 2 will be carbon dioxide. Typically, the flue gas leaving boiler 2 will contain 50-80 % by volume of carbon dioxide. The balance of the "carbon dioxide rich flue gas" will be about 15-40% by volume of water vapour (H₂O), 2-7 % by volume of oxygen (O₂), since a slight oxygen excess is often preferred in the boiler 2, and totally about 0-10 % by volume of other gases, including mainly nitrogen (N₂) and argon (Ar), since some leakage of air can seldom be completely avoided.

The carbon dioxide rich flue gas generated in the boiler 2 may typically comprise contaminants in the form of, for example, dust particles, hydrochloric acid, HCl, sulphur oxides, SOₓ, and heavy metals, including mercury, Hg, that should be removed, at least partly, from the carbon dioxide rich flue gas prior to disposing of the carbon dioxide.

The dust removal device 8 removes most of the dust particles from the carbon dioxide rich flue gas. A duct 26 and fan is operative for forwarding the carbon dioxide rich flue gas from the fabric filter 8 to the wet scrubber 10 of the gas cleaning system 6. The wet scrubber 10 comprises a circulation pump which is operative for circulating, in a slurry circulation pipe, an absorption liquid, comprising for example lime stone, from the bottom of the wet scrubber 10 to a set of nozzles arranged in the upper portion of the wet scrubber 10. The slurry nozzles are operative for finely distributing the absorption liquid in the wet scrubber 10 to achieve good contact between the absorption liquid and the flue gas being forwarded to the wet scrubber 10 via the duct 26 and flowing substantially vertically upwards inside the wet scrubber 10 to effect efficient removal of sulphur dioxide, SO₂, and other acid gases from the carbon dioxide rich flue gas.

An at least partly cleaned carbon dioxide rich flue gas leaves the wet scrubber 10 via a duct 28 which forwards the flue gas to a gas splitting point 30, where the at least partly cleaned carbon dioxide rich flue gas is divided into two flows, namely a first flow, which via the duct 20 is recirculated back to the boiler 2, and a second flow, which via a duct 32 is forwarded, via a flue gas condenser (FGC) 34, to a gas purification system in the form of a gas compression and purification unit (GPU) 40. In the FGC 34, the flue gas is cooled below its water dew point and the heat released by the resulting condensation is recovered as low temperature heat. The water content of the flue gas may for example be reduced from about 40 % by volume in the flue gas fed to the flue gas condenser to about 5 % by volume in the flue gas leaving the flue gas condenser. Depending on pH and temperature in the flue gas condenser, the flue gas condensation may also lead to a reduction of sulfur oxides, SOₓ, in the flue gas. The sulfur oxides are captured in the formed condensate and separated from the flue gas. Furthermore, wash liquid or slurry, e.g. lime slurry, entrained in the flue gas from the preceding sulfur dioxide removal step is removed during the condensation, thus reducing the problems of fouling and/or clogging of the GPU 40. In the GPU 40 the cleaned carbon dioxide rich flue gas is further cleaned and is compressed for disposal. Compressed carbon dioxide hence leaves the GPU 40 via a duct 42 and is transported away for disposal, which is sometimes referred to as "carbon dioxide sequestration". The carbon dioxide depleted portion of the flue gas leaves the GPU 40 via duct 44 and is sent to stack. The first flow, which is recirculated back to the boiler 2 via duct 20, typically comprises 50 - 75% by volume of the total flow of the partly cleaned carbon dioxide rich flue gas leaving the wet scrubber 10. The second flow, typically comprising 25 - 50% by volume of the total flow of the partly cleaned carbon dioxide rich flue gas leaving the wet scrubber 10, is, hence, forwarded, via the duct 32, to the GPU 40.

The first flow from the splitting point 30 is recirculated back to the boiler 2 via duct 20. The flue gas is conveyed by a recirculation fan 46 which forwards the flue gas to a first gas/gas heat exchanger 48 (also referred to herein as "GGH"). The GGH 48 is arranged between the boiler 2 and the dust removal device 8 and is operative for reheating the recirculated gas stream coming from the splitting point 30 via duct 20 using hot flue gas leaving the boiler 2. The hot flue gas used for reheating the recirculated gas stream is subsequently forwarded to the dust removal device 8.

The GGH 48 is a regenerative heat exchanger. Regenerative heat exchangers are generally preferred over indirect contact type heat exchangers in this type of application, since they provide a much higher surface area for a given volume, which provides a reduced exchanger volume for a given energy density, effectiveness and pressure drop. This makes a regenerative heat exchanger more economical in terms of materials and manufacturing, compared to typical indirect contact type heat exchangers. The regenerative heat exchanger may, for example, be of the rotating type, where a matrix of heat transfer elements are mounted on a wheel. The wheel is arranged between the hot and the cold stream such that during rotation the elements that are heated up in the hot stream are transferred to the cold side. The hot and the cold passes are separated via sealing strips mounted on the wheel. Leakage at the sealing strips, as well as remaining oxygen enriched recirculated gas in the heat transfer matrix when the wheel turns results in entrainment of oxygen into the hot flue gas coming from the boiler.

Flue gas may also be recirculated to the boiler 2 from a second splitting point 36 located downstream of the FGC 34. The flue gas downstream of the FGC 34 has a lower temperature than the flue gas recirculated from splitting point 30, but also a lower water content. This recirculated gas may advantageously be employed for conveying fuel from the fuel storage 12 to the boiler 2 via the supply pipe 14. Depending on the type of fuel which is used, the flue gas recirculated from the splitting point 36 may also be reheated in the GGH 48. The flue gas is conveyed via duct 38 by a recirculation fan 39 which forwards the flue gas to from the second splitting point 36 to the boiler via the fuel supply pipe 14. The lower water content of the flue gas recirculated to the boiler 2 from the splitting point 36 located downstream of the FGC 34 reduces the risk of undesired condensation in the fuel supply pipe 14.

To increase the efficiency of the plant oxygen gas provided by the oxygen source 16 is preheated before being introduced into the boiler 2. Currently the oxygen is mixed with the recirculation gas before the GGH 48. In order to minimize the cost of heating the oxygen gas in prior art oxyfuel combustion systems, the oxygen gas from the oxygen source via line 50 is mixed with the recirculated gas stream coming from the splitting point 30 via duct 20. The oxygen enriched recirculated gas stream is then heated in the GGH 48 using hot flue gas leaving the boiler 2. Due to leakage from the cold side to the hot side in the regenerative heat exchanger, for example due to pressure differences, the carbon dioxide rich flue gas from the boiler is diluted by the oxygen enriched recirculation gas. This leads to higher efforts for purification of the carbon dioxide, and also to a loss of oxygen gas for the combustion. Currently there are leakage rates of up to 2% technically accepted. These leakages increase the oxygen content in the flue gas relatively by up to 10%.

Alternatively, the oxygen gas may be preheated in a steam driven oxygen preheater 52 to a temperature suitable for injection into the boiler 2. The preheated oxygen gas may be mixed with the recirculated gas stream after the GGH 48, for example via lines 54a and/or 54b, or with the recirculated gas stream from the second splitting point 36 located downstream of the FGC 34, via line 54c.

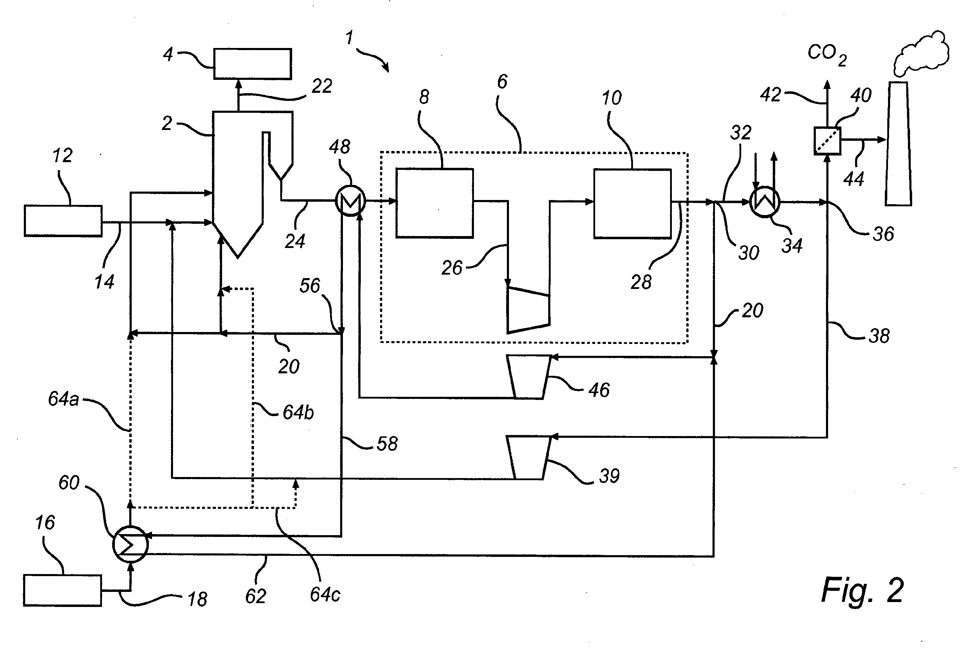

Fig. 2 is a schematic representation of a boiler system according to the invention, as seen from the side thereof. The boiler system 1 of Fig. 2 corresponds to that of Fig. 1, with the exception that the reheated recirculated gas stream leaving the GGH 48 is divided at a splitting point 56 into two flows, namely a first flow, which via the duct 20 is forwarded to the boiler 2, and a second flow, which via a duct 58 is forwarded to a second gas/gas heat exchanger 60.

The second gas/gas heat exchanger 60 is arranged between the oxygen gas source 16 and the boiler 2 and is operative for preheating the oxygen gas stream coming from the oxygen gas source 16 via duct 18 using the second flow of the reheated recirculated gas stream coming from the gas splitting point 56 via the duct 58 as heating medium. The flue gas used for preheating the oxygen gas stream is subsequently forwarded via duct 62 and may for example be rejoined with the recirculated gas flow coming from the splitting point 30 and forwarded to the GGH 48.

The quantity of the second flow of the reheated recirculated gas stream, which is to be forwarded to the second gas/gas heat exchanger 60 via the duct 58, may be determined the person skilled in the art based on, e.g., the temperature of the reheated recirculated gas stream, the temperature and quantity of the oxygen gas stream coming from the oxygen gas source 16, and the desired temperature of the oxygen gas leaving the second gas/gas heat exchanger.

The preheated oxygen gas leaving the second gas/gas heat exchanger 60 is forwarded to the boiler 2. The oxygen may forwarded to the boiler via a number of alternative routes and injected into the boiler through one or more of the injection points normally found on an oxyfuel combustion system. The oxygen gas may for example be fed directly to the boiler 2 via a separate duct (not shown), or it may be joined, via line 64a and/or 64b with the recirculated flue gas coming from the GGH 48, and/or it may be joined, via line 64c, with the fuel feed stream supplied to the boiler 2 via supply pipe 14.

The second gas/gas heat exchanger 60 is preferably an indirect contact heat exchanger. The terms "indirect" or "indirectly" as used herein in connection with heat exchange between two fluids, such as heating, cooling or chilling, denotes that the heat exchange occurs without mixing the two fluids together. Such indirect heat exchange may for example be performed in an indirect-contact heat exchanger, wherein the fluid streams remain separate and the heat transfers continuously through an impervious dividing wall. The term "indirect heat exchanger" as used herein, thus denotes a heat exchanger configured for heat exchange between two fluid streams without mixing of the two fluid streams occurring. The indirect heat exchanger may for example be of the shell and tube type. Suitable types and dimensions of indirect heat exchangers are readily identified by the person skilled in the art.

Utilizing the reheated flue gas from the GGH for preheating oxygen from the oxygen source reduces the need for preheating the oxygen gas with steam, which would lead to an efficiency decrease in the power plant. It may also provide reduced oxygen entrainment into the flue gas, thereby reducing the efforts needed for purification of the carbon dioxide prior to sequestration, and also the loss of oxygen gas for the combustion process. Furthermore, implementation of the present solution in existing oxyfuel combustion systems can be done easily and inexpensively, and results in a reduction of the overall operating costs of the system.

While the invention has been described with reference to a number of preferred embodiments, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiments disclosed as the best mode contemplated for carrying out this invention, but that the invention will include all embodiments falling within the scope of the appended claims. Moreover, the use of the terms first, second, etc. do not denote any order or importance, but rather the terms first, second, etc. are used to distinguish one element from another.

## Claims

1. A method of operating an oxyfuel combustion system, the method comprising:
combusting a fuel in a boiler (2) in the presence of a mixture of oxygen gas and recirculated flue gas to produce a carbon dioxide rich flue gas stream;
removing at least some of the dust particles from the carbon dioxide rich flue gas stream in a dust removal unit (8);
removing at least some of the sulphur dioxide from the carbon dioxide rich flue gas stream in a sulphur dioxide removal unit (10);
recirculating a portion of the carbon dioxide rich flue gas stream depleted in dust particles and sulphur dioxide to the boiler (2);
reheating the recirculated portion of the carbon dioxide rich flue gas stream before it reaches the boiler (2), said reheating being performed in a first gas/gas heat exchanger (48) using the carbon dioxide rich flue gas stream before the removal of dust particles and sulphur dioxide as a heating medium; and
preheating the oxygen gas before it reaches the boiler (2),
**characterised in that** said oxygen gas preheating is performed in a second gas/gas heat exchanger (60) using at least a portion of the reheated carbon dioxide rich flue gas stream from the first heat exchanger (48) as a heating medium,
and **in that** the portion of the reheated carbon dioxide rich flue gas stream used for preheating the oxygen gas is subsequently rejoined with the recirculated carbon dioxide rich flue gas stream depleted in dust particles and sulphur dioxide.

2. A method according to claim 1, wherein the oxygen gas is provided by an air separation unit (16).

3. A method according to any one of the preceding claims, wherein the first gas/gas heat exchanger (48) is a regenerative heat exchanger.

4. A method according to any one of the preceding claims, wherein the second gas/gas heat exchanger (60) is an indirect contact heat exchanger.

5. An oxyfuel combustion system (1) comprising:
an oxygen gas source (16);
a boiler (2) operative for combusting a fuel in the presence of a mixture of oxygen gas from the oxygen gas source and recirculated flue gas to produce a carbon dioxide rich flue gas stream;
a dust removal unit (8) arranged downstream of the boiler operative for removing at least some of the dust particles from the carbon dioxide rich flue gas stream;
a sulphur dioxide removal unit (10) arranged downstream of the boiler operative for removing at least some of the sulphur dioxide from the carbon dioxide rich flue gas stream;
a flue gas recirculating conduit (20) in fluid connection with the carbon dioxide rich flue gas stream downstream of the dust and sulphur dioxide removal units, operative for recirculating a portion of the carbon dioxide rich flue gas stream depleted in dust particles and sulphur dioxide to the boiler;
a first gas/gas heat exchanger (48) operative for reheating the recirculated portion of the carbon dioxide rich flue gas stream before it reaches the boiler, said first gas/gas heat exchanger using the carbon dioxide rich flue gas stream before the removal of dust particles and sulphur dioxide as a heating medium;
a second gas/gas heat exchanger (60) operative for preheating oxygen gas from the oxygen gas source before it reaches the boiler,
**characterised in that** said gas/gas heat exchanger is supplied with at least a portion of the reheated carbon dioxide rich flue gas stream from the first heat exchanger as a heating medium,
and **in that** the flue gas recirculating conduit (20) in fluid connection with the carbon dioxide rich flue gas stream downstream of the dust and sulphur dioxide removal units, is further operative for rejoining the portion of the reheated carbon dioxide rich flue gas stream used for preheating the oxygen gas with the recirculated carbon dioxide rich flue gas stream depleted in dust particles and sulphur dioxide.

6. An oxyfuel combustion system according to claim 5, wherein the oxygen gas source comprises an air separation unit.

7. An oxyfuel combustion system according to any one of claims 5-6, wherein the first gas/gas heat exchanger (48) is a regenerative heat exchanger.

8. An oxyfuel combustion system according to any one of claims 5-7, wherein the second gas/gas heat exchanger (60) is an indirect contact heat exchanger.

## Patentansprüche

1. Verfahren zum Betreiben eines Oxyfuel-Verbrennungssystems, wobei das Verfahren umfasst:
Verbrennen eines Brennstoffes in einen Kessel (2) in Gegenwart einer Mischung aus Sauerstoffgas und rückgeführtem Abgas zum Erzeugen eines kohlendioxidreichen Abgasstroms;
Entfernen mindestens eines Teils der Staubpartikel aus dem kohlendioxidreichen Abgasstrom in einer Entstaubungseinheit (8);
Entfernen mindestens eines Teils des Schwefeldioxids aus dem kohlendioxidreichen Abgasstrom in einer Schwefeldioxidentfernungseinheit (10);
Rückführen eines Teils des kohlendioxidhaltigen Abgasstroms, der in Staubpartikel und Schwefeldioxid abgereichert wurde, in den Kessel (2);
Wiedererwärmen des rückgeführten Teils des kohlendioxidreichen Abgasstroms vor Gelangen davon in den Kessel (2), wobei das Wiedererwärmen in einem ersten Gas-/Gas-Wärmetauscher (48) unter Verwendung des kohlendioxidreichen Abgasstroms vor dem Entfernen von Staubpartikeln und Schwefeldioxid als Erwärmungsmedium durchgeführt wird; und
Vorwärmen des Sauerstoffgases vor dem Erreichen davon des Kessels (2),
**dadurch gekennzeichnet, dass** s die Sauerstoffgas-Vorerwärmung in einem zweiten Gas-/Gas-Wärmetauscher (60) unter Verwendung mindestens eines Teils des wiedererwärmten kohlendioxidreichen Abgasstroms aus dem ersten Wärmetauscher (48) als Erwärmungsmedium durchgeführt wird,
und dadurch, dass der Teil des vorgewärmten kohlendioxidreichen Abgasstroms, der für das Vorwärmen des Sauerstoffgases verwendet wurde, danach erneut mit dem rückgeführten kohlendioxidreichen Abgasstrom, der in Staubpartikel und Schwefeldioxid abgereichert wird, zusammengeführt wird.

2. Verfahren nach Anspruch 1, wobei das Sauerstoffgas von einer Lufttrenneinheit (16) bereitgestellt wird.

3. Verfahren nach einem der vorhergehenden Ansprüche, wobei der erste Gas-/Gas-Wärmetauscher (48) ein regenerativer Wärmetauscher ist.

4. Verfahren nach einem der vorhergehenden Ansprüche, wobei der zweite Gas-/Gas-Wärmetauscher (60) ein indirekter Kontakt-Wärmetauscher ist.

5. Oxyfuel-Verbrennungssystem (1), umfassend:
eine Sauerstoffgasquelle (16);
einen Kessel (2), der zum Verbrennen eines Brennstoffes in Gegenwart einer Mischung aus Sauerstoffgas aus der Sauerstoffgasquelle und rezirkuliertem Abgas zum Erzeugen eines kohlendioxidreichen Abgasstroms betrieben werden kann;
eine Entstaubungseinheit (8), die stromabwärts des Kessels angeordnet ist, die zum Entfernen von mindestens einem Teil der Staubpartikel aus dem kohlendioxidreichen Abgasstrom betrieben werden kann; eine Schwefeldioxidentfernungseinheit (10), die stromabwärts des Kessels angeordnet ist, die zum Entfernen von mindestens einem Teil des Schwefeldioxids aus dem kohlendioxidreichen Abgasstrom betrieben werden kann;
eine Abgasrückführleitung (20) in Fluidverbindung mit dem kohlendioxidreichen Abgasstrom stromabwärts der Entstaubungs- und Schwefeldioxidentfernungseinheiten, die zum Rückführen eines Teils des kohlendioxidreichen Abgasstroms, der in Staubpartikel und Schwefeldioxid abgereichert wird, in den Kessel betrieben werden kann;
einen ersten Gas-/Gas-Wärmetauscher (48), der zum Wiedererwärmen des rückgeführten Teils des kohlendioxidreichen Abgasstroms, bevor dieser in den Kessel gelangt, betrieben werden kann, wobei der erste Gas-/Gas-Wärmetauscher den kohlendioxidreichen Abgasstrom vor dem Entfernen von Staubpartikeln und Schwefeldioxid als Erwärmungsmedium verwendet;
einen zweiten Gas-/Gas-Wärmetauscher (60), der zum Vorwärmen von Sauerstoffgas aus der Sauerstoffgasquelle betrieben werden kann, bevor es den Kessel erreicht,
**dadurch gekennzeichnet, dass** dem Gas-/Gas-Wärmetauscher mindestens ein Teil des wiedererwärmten kohlendioxidreichen Abgasstroms aus dem ersten Wärmetauscher als Erwärmungsmedium zugeführt wird,
und dadurch, dass die Rauchgasrückführleitung (20), die in Fluidverbindung mit dem kohlendioxidreichen Abgasstrom stromabwärts der Entstaubungs- und Schwefeldioxidentfernungseinheiten steht, ferner zum erneuten Zusammenführen des Teils des wiedererwärmten kohlendioxidreichen Abgasstroms betrieben werden kann, der zum Vorwärmen des Sauerstoffgases mit dem rückgeführten kohlenstoffdioxidreichen Abgasstrom, der in Staubpartikel und Schwefeldioxid abgereichert wird, verwendet wird.

6. Oxyfuel-Verbrennungssystem nach Anspruch 5, wobei die Sauerstoffgasquelle eine Lufttrenneinheit umfasst.

7. Oxyfuel-Verbrennungssystem nach einem der Ansprüche 5 bis 6, wobei der erste Gas-/Gas-Wärmetauscher (48) ein regenerativer Wärmetauscher ist.

8. Oxyfuel-Verbrennungssystem nach einem der Ansprüche 5 bis 7, wobei der zweite Gas-/Gas-Wärmetauscher (60) ein indirekter Kontaktwärmetauscher ist.

## Revendications

1. Procédé de fonctionnement d'un système de combustion oxycombustible, le procédé comprenant les étapes suivantes:
brûler un combustible dans une chaudière (2) en présence d'un mélange d'oxygène gazeux et de gaz de fumée recirculant afin de produire un courant de gaz de fumée riche en dioxyde de carbone;
enlever au moins une partie des particules de poussière du courant de gaz de fumée riche en dioxyde de carbone dans une unité d'enlèvement de poussière (8) ;
enlever au moins une partie du dioxyde de soufre du courant de gaz de fumée riche en dioxyde de carbone dans une unité d'enlèvement de dioxyde de soufre (10);
faire recirculer dans la chaudière (2) une partie du courant de gaz de fumée riche en dioxyde de carbone appauvri en particules de poussière et en dioxyde de soufre;
réchauffer la partie remise en circulation du courant de gaz de fumée riche en dioxyde de carbone avant qu'il atteigne la chaudière (2), ledit réchauffage étant exécuté dans un premier échangeur de chaleur gaz/gaz (48) en utilisant comme milieu chauffant le courant de gaz de fumée riche en dioxyde de carbone avant l'enlèvement des particules de poussière et du dioxyde de soufre; et
préchauffer l'oxygène gazeux avant qu'il atteigne la chaudière (2),
**caractérisé en ce que**:
ledit préchauffage de l'oxygène gazeux est exécuté dans un second échangeur de chaleur gaz/gaz (60) en utilisant comme milieu chauffant au moins une partie du courant de gaz de fumée riche en dioxyde de carbone réchauffé en provenance du premier échangeur de chaleur (48), et **en ce que**
la partie du courant de gaz de fumée riche en dioxyde de carbone réchauffé utilisée pour préchauffer l'oxygène gazeux est ensuite rejointe par le courant de gaz de fumée riche en dioxyde de carbone remis en circulation appauvri en particules de poussière et en dioxyde de soufre.

2. Procédé selon la revendication 1, dans lequel l'oxygène gazeux est fourni par une unité de séparation d'air (16).

3. Procédé selon l'une quelconque des revendications précédentes, dans lequel le premier échangeur de chaleur gaz/gaz (48) est un échangeur de chaleur régénératif.

4. Procédé selon l'une quelconque des revendications précédentes, dans lequel le second échangeur de chaleur gaz/gaz (60) est un échangeur de chaleur par contact indirect.

5. Système de combustion oxycombustible (1), comprenant:
une source d'oxygène gazeux (16);
une chaudière (2) utilisable pour brûler un combustible en présence d'un mélange d'oxygène gazeux en provenance de la source d'oxygène gazeux et de gaz de fumée recirculant afin de produire un courant de gaz de fumée riche en dioxyde de carbone;
une unité d'enlèvement de poussière (8) qui est installée en aval de la chaudière, utilisable pour enlever au moins une partie des particules de poussière du courant de gaz de fumée riche en dioxyde de carbone;
une unité d'enlèvement de dioxyde de soufre (10) qui est installée en aval de la chaudière, utilisable pour enlever au moins une partie du dioxyde de soufre du courant de gaz de fumée riche en dioxyde de carbone;
un conduit de recirculation de gaz de fumée (20) qui est en connexion fluidique avec le courant de gaz de fumée riche en dioxyde de carbone en aval des unités d'enlèvement de poussière et de dioxyde de soufre utilisable pour faire recirculer une partie du gaz de fumée riche en dioxyde de carbone appauvri en particules de poussière et en dioxyde de soufre vers la chaudière;
un premier échangeur de chaleur gaz/gaz (48) utilisable pour réchauffer la partie remise en circulation du courant de gaz de fumée riche en dioxyde de carbone avant qu'il atteigne la chaudière, ledit premier échangeur de chaleur gaz/gaz utilisant comme milieu chauffant le courant de gaz de fumée riche en dioxyde de carbone avant l'enlèvement des particules de poussière et du dioxyde de soufre; et
un second échangeur de chaleur gaz/gaz (60) utilisable pour préchauffer l'oxygène gazeux en provenance de la source d'oxygène gazeux avant qu'il atteigne la chaudière,
**caractérisé en ce que**:
ledit échangeur de chaleur gaz/gaz est alimenté avec au moins une partie du courant de gaz de fumée riche en dioxyde de carbone réchauffé en provenance du premier échangeur de chaleur comme milieu chauffant, et **en ce que**
le conduit de recirculation de gaz de fumée (20) en connexion fluidique avec le courant de gaz de fumée riche en dioxyde de carbone en aval des unités d'enlèvement de poussière et de dioxyde de soufre est en outre utilisable pour faire se rejoindre la partie du courant de gaz de fumée riche en dioxyde de carbone réchauffé utilisée pour préchauffer l'oxygène gazeux et le courant de gaz de fumée riche en dioxyde de carbone remis en circulation appauvri en particules de poussière et en dioxyde de soufre.

6. Système de combustion oxycombustible selon la revendication 5, dans lequel la source d'oxygène gazeux comprend une unité de séparation d'air.

7. Système de combustion oxycombustible selon l'une quelconque des revendications 5 ou 6, dans lequel le premier échangeur de chaleur gaz/gaz (48) est un échangeur de chaleur régénératif.

8. Système de combustion oxycombustible selon l'une quelconque des revendications 5 à 7, dans lequel le second échangeur de chaleur gaz/gaz (60) est un échangeur de chaleur par contact indirect.
